# EUROPEAN PATENT APPLICATION

(11) **EP 2 328 324 A1**
(43) Date of publication of application: **01.06.2011**
(21) Application number: 09306153.9
(22) Date of filing: 27.11.2009
(51) Int. Cl.: H04L 29/08, H04L 29/06

(54) **Selective routing method, network and home agent**

(71) Applicant: FRANCE TELECOM, 75015 Paris (FR)
(72) Inventor: Antoine, Stéphane, London, W45XS (GB)
(74) Representative: Cabinet Plasseraud

(57) **Abstract**

Method for selectively routing an incoming communication session through a communication network to only one communication device of a plurality of communication devices (L,H,D) belonging to a same user, each communication device being registered with the communication network so that, for at least one communication device of said plurality, an association of a respective communication device address, a respective communication device type, a respective communication device state and an identifier of said user is stored in the communication network. Responsive to detecting an incoming communication session intended to said user, only one communication device of said plurality is selected by taking account of information relating to at least some of the communication device types and states stored in association with the identifier of said user, and the incoming communication session is routed to the address of the selected communication device stored in association with the identifier of said user.

## Description

The present invention relates to communication session routing.

It is common to route a communication session through a communication network to a user holding a communication device.

A problem arises when the user has a plurality of communication devices.

As a non-limiting example, a user may use several communication devices on a daily basis to receive Voice over IP (Internet Protocol), so-called VoIP, phone calls. For instance, a typical office employee may have a handheld device such as a PDA (Personal Digital Assistant) or a smart phone, his professional laptop computer, as well as an IP deskphone. Such a user would be using at any given time one of his three communication devices to receive VoIP calls.

Previous work has addressed the issue of directing an incoming communication session to one of the communication devices belonging to a user.

In particular, US2005/0058269 describes a method to automatically redirect a telephone call to a secondary device located in a secondary location. The method of redirecting the incoming call is based upon the user's presence on a packet network. In more detail, redirection is based on the network status (log on) of the user. Three statuses are defined for the user: 'Logged in locally' in which case the calls are directed to the workplace location, 'Logged in remotely' in which case the calls are directed to a remote location and 'Not logged in'.

Moreover the SIMPLE (Session Initiation Protocol for Instant Messaging and Presence Leveraging Extensions) working group of the IETF (Internet Engineering Task Force) has described mechanisms used to support presence. SIMPLE enables SIP (Session Initiation Protocol) based mechanism to identify and thus locate a user whose presence information has been reported for delivery of an incoming session.

Thus, the above-mentioned art takes benefit of user related presence information to route calls.

However this user centric approach is not optimal. Indeed, it can lead to an incoming call being delivered to a user's communication device which is not suitable for use by the user at the moment the call is received.

For instance, in the mode of operation disclosed in US2005/0058269, if the user is neither at work nor at home, he will lose the call, although he may have answered the call if directed to his mobile phone.

According to another example, a user may receive a call on a handheld device whose battery level is very low. Retrieving a phone call from a handheld device with low battery power can result in the mobile phone turning off in the midst of the conversation.

There is thus a need for improving the way communication sessions are routed with respect to a user having several communication devices.

The invention proposes a method for selectively routing an incoming communication session through a communication network to only one communication device of a plurality of communication devices belonging to a same user, each communication device of said plurality being registered with the communication network so that, for at least one communication device of said plurality, an association of a respective communication device address, a respective communication device type, a respective communication device state and an identifier of said user is stored in the communication network. The method comprises the following steps carried out by the communication network responsive to detecting an incoming communication session intended to said user:
- selecting only one communication device of the plurality of communication devices belonging to said user, by taking account of information relating to at least some of the communication device types and states stored in association with the identifier of said user; and
- routing the incoming communication session to the address of the selected communication device stored in association with the identifier of said user.

In contrast with the above-mentioned prior art, the invention thus adopts a device centric approach. By taking account of communication device types and states, a communication device that is particularly adapted to receive the incoming communication session can be selected. As a non-limiting example, the communication device may be selected so as to correspond to the communication device that the user is most likely to use to retrieve the incoming communication session.

Other advantageous features which can be combined in any suitable manner are listed in the dependent claims.

For instance, communication device states may be received by the communication network for only some of the communication devices of said plurality. In this case, the communication network may infer by itself relevant information relating to at least one other user's communication device by taking account of the received communication device states so as to be able to select the most appropriate user's communication device.

The communication device states can include information relating to an activity mode of and/or an indication of a level of power battery remaining on the corresponding communication devices.

Priority levels taking account of corresponding communication device types and states may be used for selecting only one communication device. A priority level table may be stored in the communication network to this end.

In further advantageous embodiments, the invention proposes solutions to route traffic to user's communication devices by taking account of corresponding source ports obtained beforehand, and to limit the possible conflicts between such source ports.

The invention a communication network arranged for selectively routing an incoming communication session to only one communication device of a plurality of communication devices belonging to a same user, each communication device of said plurality being registered with the communication network so that, for at least one communication device of said plurality, an association of a respective communication device address, a respective communication device type, a respective communication device state and an identifier of said user is stored in the communication network. The communication network comprises, responsive to detecting an incoming communication session intended to said user:
- a selecting unit for selecting only one communication device of the plurality of communication devices belonging to said user, by taking account of information relating to at least some of the communication device types and states stored in association with the identifier of said user; and
- a routing unit for routing the incoming communication session to the address of the communication device selected by the selecting unit, stored in association with the identifier of said user.

The invention further proposes a home agent capable of being placed in a communication network for selectively routing an incoming communication session to only one communication device of a plurality of communication devices belonging to a same user, each communication device of said plurality being registered with the home agent so that, for at least one communication device of said plurality, an association of a respective communication device address, a respective communication device type, a respective communication device state and an identifier of said user is stored in the home agent. The home agent comprises, responsive to detecting an incoming communication session intended to said user:
- a selecting unit for selecting only one communication device of the plurality of communication devices belonging to said user, by taking account of the information relating to at least some of the communication device types and states stored in association with the identifier of said user; and
- a routing unit for routing the incoming communication session to the address of the communication device selected by the selecting unit, stored in association with the identifier of said user.

According to another aspect, the invention proposes a computer program product comprising code instructions for implementing the above-mentioned method, when loaded and run in a communication network.

According to still another aspect, the invention proposes a communication device arranged for belonging to a user and for registering with a communication network, the communication device comprising a transmitting unit for transmitting to the communication network, a respective communication device address, a respective communication device type, a respective communication device state and an identifier of said user.

The invention also proposes a computer program product comprising code instructions, when loaded and run in a communication device as mentioned above, for transmitting to a communication network, a respective communication device address, a respective communication device type, a respective communication device state and an identifier of a user to which said communication device belongs.

The preferred features of the above aspects which are indicated by the dependent claims may be combined as appropriate, and may be combined with any of the above aspects of the invention, as would be apparent to a person skilled in the art.
- FIG.1 represents a MIP Binding Cache Entry for use in an advantageous embodiment of the invention;
- FIG.2 schematically shows a communication device registration with a home agent;
- FIG.3 schematically shows possible steps involved in the registration of multiple devices belonging to a same user;
- FIG.4 illustrates the problem of routing data in a context of multiple devices belonging to a same user;
- FIG.5 illustrates a possible solution to the problem shown in FIG.4;
- FIG.6 represents an extended Binding Cache Entry for use in an advantageous embodiment of the invention;
- FIG.7 represents a further extended Binding Cache Entry for use in an advantageous embodiment of the invention.

The present invention relates to routing of a communication session through a communication network to only one communication device of a plurality of communication devices belonging to a same user.

The expression 'communication session' covers any type of communication including voice call, data transmission, IP packets transmission, or other.

The expression 'communication device' covers any type of device, whatever the communication technology it implements may be. It covers for instance a laptop, a PDA (Personal Digital Assistant), a fixed phone, a deskphone, a mobile phone, a smart phone, a computer, etc.

The 'communication network' can also be any type of network. In the following, the invention will be more particularly described in the context of a Mobile IP protocol, but it could be implemented by using any other suitable protocol and/or technology.

It is assumed that each communication device of the user is registered with the communication network. Within the framework of such registration, as a result of such registration, or simply after such registration has taken place, the communication network stores, for one or several of the communication devices, corresponding communication device information together with an identifier of the user holding the communication devices.

The communication device types and states may advantageously be received by the communication network from the corresponding communication devices within the framework of or as a result of registration of the communication devices. As an example, the communication device information and user identifier may be transmitted by the corresponding communication devices themselves. A transmitting unit may be provided in each communication device for this purpose.

Thanks to the user identifier, each device can be recognised by the network as belonging to the user.

The above-mentioned communication device information can include a communication device address, a communication device type and a communication device state. Other information may be added to this list, such as a communication device identifier or any other device related information.

For a given communication device, all the above-mentioned information items are stored in association in the communication network.

The association is advantageously stored in a memory within the communication network. The memory can belong to a specific device. It may alternatively be part of an existing device, such as a home agent i.e. a device involved in the routing operation. It may also be distributed between several devices.

The above-mentioned information items will now be further detailed.

The user identifier (User ID) may be an ID identifying the user uniquely. The User ID may follow the Universal Resource Identifier format, as defined in the IETF Request for Comments RFC 3986, "Uniform Resource Identifier (URI): Generic Syntax", by Berners-Lee, R. Fielding, L. Masinter, dated January 2005. Other formats may be used instead.

The communication device state refers to information relating to the state of the communication device. It may contain information such as:
- a level of battery power remaining on the communication device, in particular but not exclusively if the communication device is a handheld device or a laptop, and/or
- an activity mode which gives away to the communication network some information regarding the level of activity of the communication device. This may include information such as:
   o Device is idle or sleeping, and/or
   o Device has been locked by the user, and/or
   o Keyboard activity has / has not been identified, and/or
   o Device is active, receiving and/or sending traffic, and/or
   o Other.

Note that in contrast with the presence concept mentioned in the introduction which relates to the user himself, the communication device state relates to a given communication device of the user, not to the user in general.

The communication device type refers to the nature of the device. It can give information about the capabilities of the communication device. It can contain information such as:
- Handheld Device, and/or
- Laptop, and/or
- Desktop, and/or
- Deskphone, and/or
- Other.

If at least some of the communication device information changes over time, the communication network may be informed of the changes. For example, a communication device may inform the communication network when its state has changed or is about to change. As a non-limiting example, a communication device may inform the communication network when its level of remaining battery power reaches a predetermined threshold. Of course, many possibilities of information updating can be envisaged as it will appear to one skilled in the art. The updates can take the form of a new communication device registration, of a specific update procedure or any other appropriate procedure.

As already mentioned, the invention may be implemented in a Mobile IP protocol (MIP), for example according to MIPv4 as defined in the Internet Engineering Task Force (IETF) Request for Comments RFC 3344, "IP mobility support in IPv4", by C. Perkins, dated August 2002, or according to MIPv6, as defined in the IETF Request for Comments RFC 3775 "Mobility support in IPv6", by D. Johnson, C. Perkins and J. Arkko, dated June 2004.

In this case, there is no need to install an application service on top of MIP on every device to manage the routing of incoming calls. Unlike with a SIP based mechanism, the communication session routing will be handled only by MIP in the network, i.e. only at the network level (ISO model Layer 3), and it will be totally transparent to the application layer (highest layer in ISO model).

As a reminder on conventional MIP, when the mobile node is away from home, it registers its care-of address with its home agent. Depending on its method of attachment, the mobile node will register either directly with its home agent, or through a foreign agent which forwards the registration to the home agent.

When a mobile node detects that it has moved to a foreign network, it obtains a care-of address on the foreign network. The care-of address can either be determined from foreign agent's advertisements (a foreign agent care-of address), or by some external assignment mechanism such as Dynamic Host Configuration Protocol DHCP (a co-located care-of address).

The mobile node operating away from home then registers its new care-of address with its home agent through exchange of Registration Request and Registration Reply messages with it, possibly via a foreign agent.

Datagrams sent to the mobile node's home address are intercepted by its home agent, tunnelled by the home agent to the mobile node's care-of address, received at the tunnel endpoint (either at a foreign agent or at the mobile node itself), and finally delivered to the mobile node.

In the reverse direction, datagrams sent by the mobile node are generally delivered to their destination using standard IP routing mechanisms, not necessarily passing through the home agent.

When away from home, Mobile IP uses protocol tunneling to hide a mobile node's home address from intervening routers between its home network and its current location. The tunnel terminates at the mobile node's care-of address. The care-of address must be an address to which datagrams can be delivered via conventional IP routing. At the care-of address, the original datagram is removed from the tunnel and delivered to the mobile node.

Mobile IP provides two alternative modes for the acquisition of a care-of address: the "foreign agent care-of address" method and the "co-located care-of address" method.

A "co-located care-of address" is a care-of address acquired by the mobile node as a local IP address through some external means, which the mobile node then associates with one of its own network interfaces. The address may be dynamically acquired as a temporary address by the mobile node such as through DHCP, or may be owned by the mobile node as a long-term address for its use only while visiting some foreign network. When using a co-located care-of address, the mobile node serves as the endpoint of the tunnel and itself performs decapsulation of the datagrams tunnelled to it.

A home agent must be able to attract and intercept datagrams that are destined to the home address of any of its registered mobile nodes. Using the proxy and gratuitous ARP (Address Resolution Protocol) mechanisms described in MIPv4 can be satisfied if the home agent has a network interface on the link indicated by the mobile node's home address.

According to an advantageous embodiment of the present invention, MIP extensions can be introduced to transport the above information mainly "User ID", "Device state" and "Device type".

When using MIP, the registration of a communication device with the communication network can be as follows.

The conventional MIP registration is modified to account for the new "User ID", the "Device state" and "Device type". This new information is advantageously introduced in new fields of the Registration Request.

It is reminded that in MIP, when a home agent (HA) accepts a valid Registration Request from a mobile node (MN) that it serves as a home agent, the home agent must create or modify the entry for this mobile node in its mobility binding, which is called a MIP Binding Cache Entry.

In the present case, the information "User ID", the "Device state" and "Device type" will populate the MIP routing table hence introducing a modification to the default MIP Binding Cache Entry described in RFC 3344.

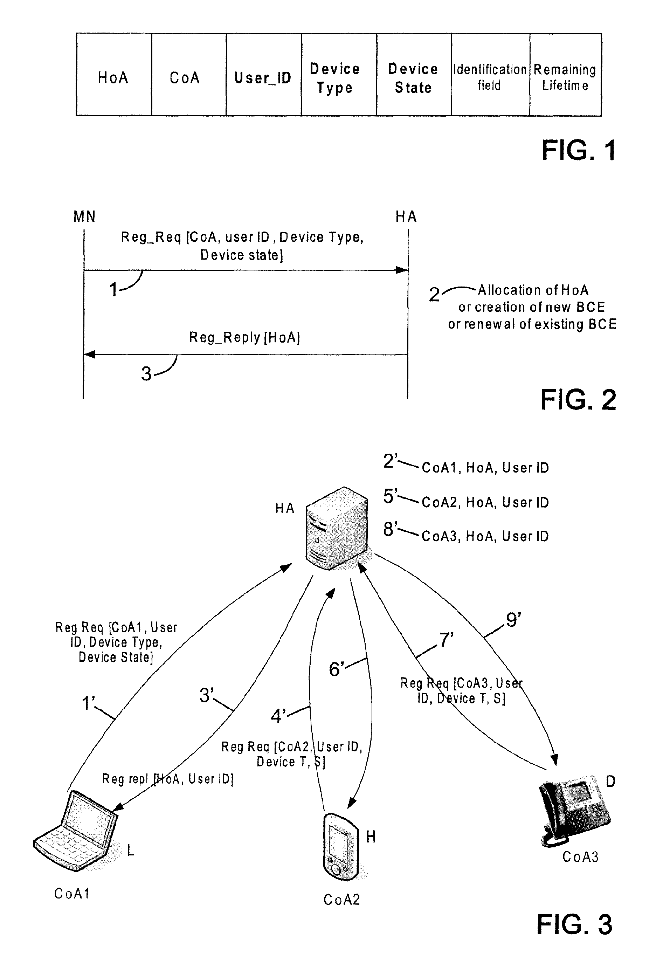

A proposed MIP Binding Cache Entry is shown in FIG.1 and contains the introduced fields "User ID", "Device state" and "Device type" in addition to the conventional fields: the mobile node's home address (HoA), the mobile node's care-of address (CoA), the Identification field from the Registration Reply (a 64-bit number, constructed by the mobile node, used for matching Registration Requests with Registration Replies, and for protecting against replay attacks of registration messages) and the remaining Lifetime of the registration (number of seconds remaining before the registration is considered expired).

Such a MIP Binding Cache Entry thus incorporates the above-mentioned association of a communication device address (CoA), a communication device type ("Device type"), a communication device state ("Device state") and a user identifier ("User ID"), as well as other fields.

As shown in step 1 of FIG.2, the registration of a given communication device among the communication devices belonging to a same user includes the transmission of a Registration Request (Reg_Req) from said communication device (MN) to the home agent (HA) located in the communication network.

The Registration Request contains the "User ID" of the user owning the communication device from which the Registration Request is sent, as well as the "Device type" and "Device State" information. In this embodiment, thus information is added as extensions to the Mobile IP fields already defined in RFC 3344.

As shown in step 2 of FIG.2, when the HA receives for the first time a Registration Request from a user identified by "User ID", the HA allocates a Home address (HoA) from its pool of home addresses. The "User ID" is used for authenticating the user at MIP level.

When the user is first authenticated to the HA, the HA will create a Binding Cache Entry (BCE) for the user according to the above-mentioned format also shown in FIG.1. The new BCE contains the new values corresponding to "User ID", "Device type" and "Device State" as well as the default MIPv4 fields.

If a BCE has already been created with respect to the considered communication device, the Registration Request may result in the HA to renew or update the existing BCE.

In step 3 of FIG.2, a Registration Reply (Reg_Reply) as in RFC 3344 is sent from the HA to the MN. It contains the HoA allocated by the HA. It may also contain the "User ID".

FIG.3 illustrates the various steps involved in the registration of multiple devices belonging to a same user.

The multiple devices will appear as multiple registered Care of Addresses (CoAs) using the same User ID.

In step 1', the laptop L belonging to a user whose ID is "User ID" obtains a local address or CoA, namely CoA1 in the present example, in the communication network where it is located. The latter can include a corporate network, a user's home router, a public hot spot, and/or other. The laptop L sends a Registration Request to the home agent (HA) located in the network. The Reg_Req contains the "User ID", "Device type" and "Device state", as described above.

In step 2', the HA creates a Binding Cache Entry for the "User ID" which has the HoA that the HA first allocates to the laptop L.

In step 3', a Registration Reply Reg_Repl is sent back to the laptop L at the address CoA1. Reg_Repl contains the HoA assigned to the laptop L. It may also contain "User ID".

In step 4', when the handheld device H of the user starts, it gets a new CoA, namely CoA2. The Reg_Req sent by the device to the HA contains the same "User ID" that was contained in the Reg_Req sent from the laptop L. It also contains "Device type" (T) and "Device state" (S), as described above.

In step 5', when the HA receives a Reg_Req with the same "User ID", that was originated from a care of address (CoA2), the HA may look at the device type information, other information uniquely identifying the device or some other device related information. This information may be compared with the same type of information already obtained with respect to the laptop L. This will enable the HA to ascertain whether the Reg_Req is from the same device which previously sent a Reg_Req or from another device. As, in the present case, the Reg_Req is originated from a different device, the HA creates a new BCE for the device's CoA2 with the same Home Address. It is advantageous to use another data in addition to the device type to uniquely identify a device so as to avoid any ambiguity since a user could be using two or more devices of the same type.

In step 6', the same HoA is then sent back to the handheld device H.

In step 7', as the user's deskphone D starts, a Reg_Req is sent with CoA3 as source address and "User ID". The Device Type is "Deskphone".

In step 8', a new BCE is created with the HoA allocated to the user.

In step 9', Reg_Repl is sent back to the Deskphone containing the same HoA for use by the Deskphone.

Selective routing of an incoming communication session to only one communication device of a plurality of communication devices belonging to the same user will now be described.

Responsive to detecting an incoming communication session intended to the user, the communication network retrieves information relating to at least some of the communication device types and states stored in association with the identifier of the user, such as the above-mentioned "Device type" and "Device state" information, and selects only one communication device of the plurality of communication devices belonging to the user by taking account of that information. Advantageously, the selected communication device is chosen so as to have high chances, or even the highest chances among all the user's communication devices, to retrieve the incoming communication session. Then the communication session is routed to the address of the selected communication device stored in association with the identifier of the user.

Those steps can be carried out by a plurality of entities, or a single entity such as the Home Agent (HA) when implemented in the MIP protocol for example.

To select only one communication device by taking into account communication device types and states, a priority level can be defined in the communication network, e.g. in the HA. A priority table can thus be built for a given user and a given HoA. It should be noted however that the communication device types and states may be taken into account in a different manner, i.e. without defining any priority level explicitly.

In case priority levels are used, a priority level is advantageously assigned to each registered communication device depending on the corresponding device state and type. Alternatively priority levels may be assigned for only some communication devices of the user.

Any rules can be defined by the network operator to assign different levels of priority to different devices according to their "Device state" and "Device type". So the assigned priority levels relate to the communication device types and states.

The following exemplary tables include a level of priority per communication device. The routing of a communication session, e.g. the routing of incoming packets such as VoIP call packets will be routed according to the level of priority in these tables.

Incoming packets intended to a user, e.g. to the user's HoA in MIP, will be sent to the user's communication device which has the highest level of priority.

A first illustrative and non-limiting example is as follows.

Incoming packets destined for the user whose ID is David@orange.com will be destined to the Home Address that corresponds to all of David's communication devices. The incoming packets destined for the HoA will reach the user's Home Agent on the operator home network.

Once the incoming packets whose destination address is the HoA arrive at the HA, they are tunnelled to the Care of Address that corresponds to the communication device having the highest level of priority.

As shown in Table I, the laptop of user David is "Active", so the level of priority assigned to this laptop is I1 which is the highest one.

David's deskphone is active and is assigned I2 which is the intermediate level of priority.

David's handheld device has low battery power hence after registration, it is assigned I3, the lowest level of priority.

Table I given below may be stored in the communication network, e.g. in the HA.

**Table I : HA Table with laptop having highest priority level**

| User ID=David@orange.com | | | | |
|---|---|---|---|---|
| Device Type | Device state | Priority | Routing information | |
| | | | Care of address | Home address |
| Laptop | Active | I1 (highest level) | CoA1 | HoA |
| Handheld device | Low battery | I3 (lowest) | CoA2 | HoA |
| Deskphone | Active | I2 (intermediate) | CoA3 | HoA |

As a result of the above prioritization, incoming calls will be directed to David's laptop rather than David's deskphone or David handheld device.

In a second illustrative and non-limiting example, David had locked his laptop computer e.g. with the CTRL + ALT + DELETE key sequence. This sequence identifies the device state: "Locked by the user". The laptop state information has been sent to the HA in the Reg_Req.

Moreover David's handheld device has a reasonable level of batteries. The handheld state information has been sent to the HA in the Reg_Req.

As David has locked his laptop, the system infers that he might be away from his desk so the level of priority associated with the deskphone will be lower than the handheld device's. In this case, this device state has not been sent in the MIP Reg_Req but instead has been updated by the HA itself.

Table II given below may be stored in the communication network, e.g. in the HA.

**Table II : HA Table with handheld device having highest priority level**

| User ID=David@orange.com | | | | |
|---|---|---|---|---|
| Device Type | Device State | Priority | Routing information | |
| | | | Care of address | Home address |
| Laptop | Locked by the user | I3 (lowest) | CoA1 | HoA |
| Handheld device | ok battery | I1 (highest) | CoA2 | HoA |
| Deskphone | Infer user away from desk | I2 (intermediate) | CoA3 | HoA |

As a result of the above prioritization, incoming calls will be directed to David's handheld device rather of David's deskphone or David's laptop.

As this will appear to one skilled in the art, many other possibilities can be envisaged to route a communication session to a given communication device of a user rather than to another of his communication devices. The priority level assignment can be different than in the above examples. Also, the information relating to communication device types and states used for selecting only one communication device and routing the communication to its address can be different from priority levels as described above. As an example, the communication device types and states may be taken into account more directly by the communication network. For instance, each communication device type and each communication device state may be assigned a corresponding weight, the cumulative weight obtained for a given communication device being taken into account for selection and routing. Other examples may be envisioned as well.

Once the call or session has started on one communication device, the session may advantageously continue and finish on the same communication device. In case the invention is implemented in the MIP protocol, MIP may handle the session continuity as a communication device changes its point of attachment in the Internet.

It is possible that communication device states are obtained by the communication network, e.g. the HA, for only some of the communication devices belonging to the considered user. In such a situation, a state or other state related information may be inferred for at least one other communication device by the communication network by taking account of the known communication device states.

Table III describes a few non-limiting examples of communication devices and a possible way of interpreting the states and redirecting the calls.

It is a table that gives some indications of how a service provider could interpret the state of different user's communication devices in order to route a call or any other communication session to an appropriate communication device. According to this table, the states of only the laptop and the handheld device are explicitly known by the communication network. A state for the deskphone may be inferred from those known states.

The last column of the Table III includes the target devices to which a call may be directed, each communication device being associated with a level of priority according to the "Device state" and "Device type" reported to the communication network or obtained by the communication network by any appropriate manner.

In this example:
- Priority level "1" corresponds to the highest level of priority.
- Priority level "2" corresponds to the intermediate level of priority.
- Priority level "3" corresponds to the lowest level of priority.

A set of default priorities can be set: for example, first the handheld device, then the deskphone and then the laptop. And this set of priority can change depending on the "Device state".

The table below shows that the "Device state" may be most relevant for the handheld device and the laptop. Several other scenarios can be envisioned such as when the laptop is not connected in VPN (Virtual Private Network) and the user has other personal devices, etc. Other states, not mentioned here could also be used as will appear to one skilled in the art. Additional states could be introduced as combinations of states presented herein.

**Table III: Information inferring on the relative position of a user with respect to a device and possible target devices with level of priority**

| Device State | | Interpretation | Possible Target devices |
|---|---|---|---|
| Laptop | Handheld device | | |
| Computer locked with Ctrl+Alt+Del | Ok | User may be away from his laptop and his deskphone | 1-Handheld device |
| No keyboard activity has been detected for a while | | | 2-Deskphone |
| | | | 3-Laptop |
| VPN connection is established | Ok | The user may be away from his deskphone (may be at home or in a meeting room) | 1-Handheld device |
| | | | 2-Laptop |
| | | | 3-Deskphone |
| Keyboard or Internet activity detected. | Ok | The user is using his laptop or desktop. | 1-Deskphone |
| | | | 2-Laptop |
| Connected to corporate network without VPN | | (User may be sitting at his office desk) | 3-Handheld device |
| VPN connection is established | Low battery | The user may be away from his deskphone | 1-Laptop |
| | | | 2-Handheld device |
| | | | 3-Deskphone |
| Laptop not connected | Low battery | User probably not at work | 1-Handheld device |
| | | | 2-Deskphone |

Note that although the 'interpretation' column in Table III has been formulated in terms relating to the user, it could refer to the communication devices themselves instead. As an example, "The user may be away from his deskphone" could read rather "The deskphone may be idle or sleeping".

In summary, the invention can enable a mobile user to receive an incoming communication session (e.g VoIP call, an IP session, or other) on any of his communication devices provided that each one of his devices is registered on the network with the same User ID. New extensions to Mobile IP may be used in order to transport "Device type" and "Device state" for each communication device to the communication network. This information may then be used by the network to infer the relative location of the user, or the state of one or several other communication devices of the user. The incoming communication session is then advantageously directed to the user's device at which the user is most likely to be able to take the call.

While the user is in the midst of a communication using one of his communication devices, the user may start another session (outgoing communication session) from another of his communication devices. When using the MIP protocol for example, multiple communication devices belonging to a single user normally have the same home address. As, in MIPv4, the home address registered in the HA is the only visible address in the Internet for all of the user's communication devices, the HA can no longer rely on the home address alone to route incoming packets to the communication device from which a new communication session was originated.

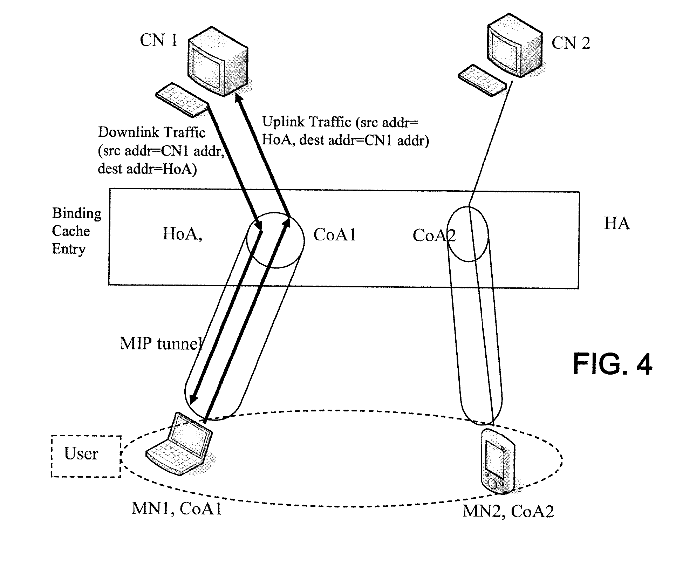

This problem is illustrated in FIG.4 in the non-limiting context of MIPv4. In this figure, the communication devices MN1 and MN2 belong to the same user. Both communication devices MN1 and MN2 have registered with the HA, with CoA1 and CoA2 respectively. The Binding Cache Entry for the user contains CoA1 and CoA2 to route packets sent to HoA. The downlink packets sent from the correspondent node CN1 to the user are addressed to HoA as the address identifying the user. When these downlink packets reach the HA, the destination address HoA is not sufficient anymore to identify unequivocally the destination to which the data or packets should be sent. Indeed they are two addresses CoA1 and CoA2 to which the downlink packets from GN1 could be sent.

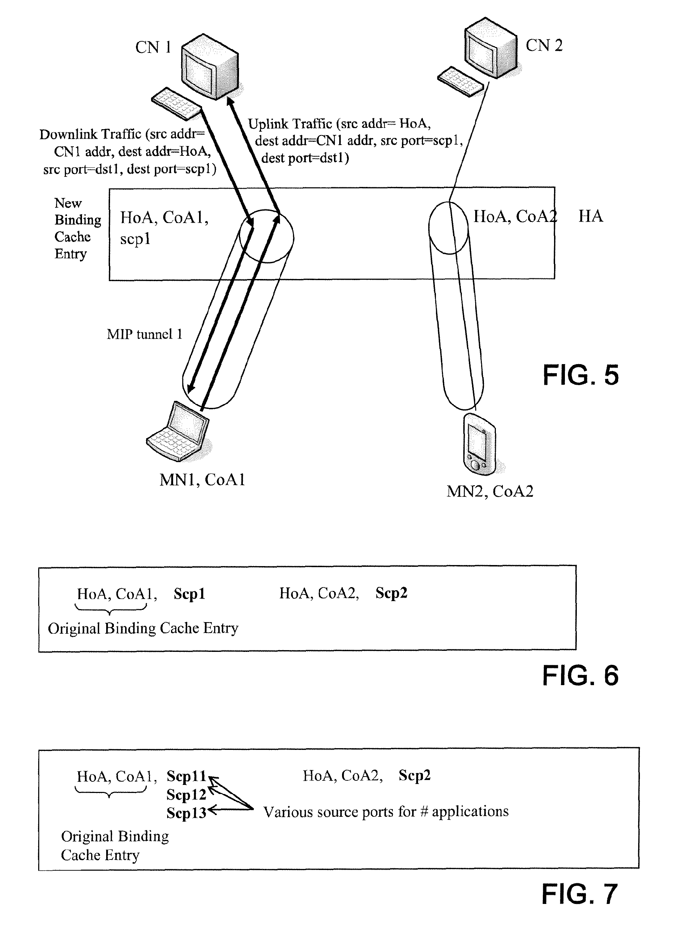

An advantageous solution to this problem is described here after with reference to FIG.5.

This solution introduces the source port of the outgoing packets from a user's device in the Binding Cache Entry. This is in contrast with traditional Mobile IP, in which the routing of IP packets is based on the destination address only.

The source address of the data packets coming out of the MN's tunnel terminating at CoA1 is the HoA. When these packets are decapsulated from MIP tunnel 1, the source port (Scp1) of the encapsulated packet is associated with the Binding Cache Entry which identifies the tunnel 1 end point. Hence the source port of the outgoing packet is added to the original Binding Cache Entry in the extended Binding Cache Entry.

In other words, for each communication device concerned, the association of information stored in the communication network, e.g. in the Binding Cache Entry, further includes a corresponding source port used to originate the outgoing communication session.

FIG.6 shows the extended Binding Cache Entry for the considered user. The original Binding Cache Entry (HoA, CoA1) is extended with the source port scp1. Likewise for the source port scp2 of uplink packets coming from tunnel terminating at CoA2, which is associated with the original binding (HoA, CoA2).

The source port "scp1" in the extending Binding Cache Entry is used to route downlink data packets addressed to HoA to CoA1.

Advantageously, several source ports may be associated with a given original Binding Cache Entry. This may happen for example when several applications are initiated from a given communication device. Each source port will thus identify an application launched from said communication device. FIG.7 shows an extended Binding Cache Entry with several source ports (scp11, scp12, scp13).

The source port stored in the extended Binding Cache Entry, or any other appropriate association stored in the communication network, is then used to route data to the appropriate communication device.

Another problem may arise if the source ports of the tunnelled data packets from two different communication devices are identical.

This unlikely event may occur because the source port of an application is usually an ephemeral port allocated at random for the length of time of existence of the application. The source port of applications from different devices being completely independent, the rare case of collision of source port across devices may occur.

This problem is advantageously addressed by determining the source port used by a communication device to originate an outgoing communication session in relation with a respective application by applying a hash function to parameters including a time at which said application is launched.

In this way, applications from two or several devices belonging to a given user will normally not have the same source address.

In a non-limiting implementation, any application may choose a random port from any appropriate hash function that takes the local IP address of the communication device as one of the argument and the universal time at which the application is launched offset by the communication device serial number. As the local IP address of different terminals are different when public IP addresses are used or when under the same NAT (Network Address Translation device), the result of the hash function will be different.

In the event the local IP addresses of two communication devices are identical (which may happen when the communication devices are under two different NATs), the universal time at which the application is launched can provide the differentiating argument to produce a unique source port number. The time of launch of applications by a given user on two different devices is very unlikely to be the same.

To make sure the inputs are different, we propose to offset e.g. the time of application launch by the device serial number. The result will be a number that is uniquely translated into a positive integer below 64KB (2^16). This number will be understood as a normal source port by the application.

The function that translates the hashed result into an integer advantageously gives a result in a range that corresponds to the User ID.

Hence the source ports of applications from different communication devices belonging to the same user will always be different.

The source port can thus be defined as HASH (User ID, local IP address, Time of application_launch + offset (device serial number)). Other definitions may be used instead or in addition, as it will appear to one skilled in the art.

The invention also provides a communication network arranged for selectively routing an incoming communication session to only one communication device of a plurality of communication devices belonging to a same user according to the principles mentioned above. Appropriate units in the communication network (selecting unit, routing unit) are used accordingly.

A home agent capable of being placed such a communication network is also provided. In this case, the above-mentioned units may be part of this home agent. Note that the expression "home agent" suits particularly well to a MIP context, but it may actually cover any type of device (server, remote computer, or other) capable of carrying out the above-mentioned functions.

All or part of the steps described above may be implemented by means of a computer program product comprising appropriate code instructions.

Also, the communication devices can be adapted so as to comply with the method described above. In particular, they may be each arranged for comprising a transmitting unit for transmitting to the communication network, a respective communication device address, a respective communication device type, a respective communication device state and an identifier of said user.

A computer program product may also be used in relation to such communication device.

## Claims

1. A method for selectively routing an incoming communication session through a communication network to only one communication device of a plurality of communication devices (L,H,D) belonging to a same user, each communication device of said plurality being registered with the communication network so that, for at least one communication device of said plurality, an association of a respective communication device address, a respective communication device type, a respective communication device state and an identifier of said user is stored in the communication network, the method comprising the following steps carried out by the communication network responsive to detecting an incoming communication session intended to said user:
- selecting only one communication device of the plurality of communication devices belonging to said user, by taking account of information relating to at least some of the communication device types and states stored in association with the identifier of said user; and
- routing the incoming communication session to the address of the selected communication device stored in association with the identifier of said user.

2. The method as claimed in claim 1, wherein the communication device types and states are received by the communication network from the corresponding communication devices within the framework of or as a result of registration of said communication devices.

3. The method as claimed in claim 1 or 2, wherein communication device states are received by the communication network for only some of the communication devices of said plurality, information relating to a communication device state for at least one other communication device being determined by the communication network by taking account of the received communication device states.

4. The method as claimed in claim 1, wherein the respective communication device state for at least one communication device of said plurality includes information relating to an activity mode of said communication device.

5. The method as claimed in claim 1, wherein the respective communication device state for at least one communication device of said plurality includes an indication of a level of power battery remaining on said communication device.

6. The method as claimed in claim 1, wherein, when a second communication device of said plurality registers with the communication network by using the identifier of said user already used during registration of a first communication device of said plurality, the communication device types of said first and second communication devices or other information uniquely identifying said first and second communication devices are compared in the communication network.

7. The method as claimed in claim 1, wherein respective priority levels are obtained by the communication network for at least some communication devices of said plurality by taking account of the corresponding communication device types and states, and wherein said information relating to at least some of the communication device types and states include the corresponding priority levels.

8. The method as claimed in claim 1, said method being implemented in a Mobile IP protocol.

9. The method as claimed in claim 1, wherein, when an outgoing communication session is originated by said user through a non-selected communication device of said plurality whilst said incoming communication session is routed to the address of the selected communication device stored in association with the identifier of said user, the stored association, for said non-selected communication device, is arranged so as to further include at least one source port used by said non-selected communication device to originate said outgoing communication session, and wherein said at least one source port is further used to route data to said non-selected communication device through said communication network.

10. The method as claimed in claim 9, wherein the source port used by said non-selected communication device to originate said outgoing communication session in relation to a respective application is determined by applying a hash function to parameters including a time at which said application is launched.

11. A communication network arranged for selectively routing an incoming communication session to only one communication device of a plurality of communication devices (L,H,D) belonging to a same user, each communication device of said plurality being registered with the communication network so that, for at least one communication device of said plurality, an association of a respective communication device address, a respective communication device type, a respective communication device state and an identifier of said user is stored in the communication network, the communication network comprising, responsive to detecting an incoming communication session intended to said user:
- a selecting unit for selecting only one communication device of the plurality of communication devices belonging to said user, by taking account of information relating to at least some of the communication device types and states stored in association with the identifier of said user; and
- a routing unit for routing the incoming communication session to the address of the communication device selected by the selecting unit, stored in association with the identifier of said user.

12. A home agent capable of being placed in a communication network for selectively routing an incoming communication session to only one communication device of a plurality of communication devices (L,H,D) belonging to a same user, each communication device of said plurality being registered with the home agent so that, for at least one communication device of said plurality, an association of a respective communication device address, a respective communication device type, a respective communication device state and an identifier of said user is stored in the home agent, the home agent comprising, responsive to detecting an incoming communication session intended to said user:
- a selecting unit for selecting only one communication device of the plurality of communication devices belonging to said user, by taking account of the information relating to at least some of the communication device types and states stored in association with the identifier of said user; and
- a routing unit for routing the incoming communication session to the address of the communication device selected by the selecting unit, stored in association with the identifier of said user.

13. A computer program product comprising code instructions for implementing the method as claimed in any one of claims 1 to 10 when loaded and run in a communication network.

14. A communication device arranged for belonging to a user and for registering with a communication network, the communication device comprising a transmitting unit for transmitting to the communication network, a respective communication device address, a respective communication device type, a respective communication device state and an identifier of said user.

15. A computer program product comprising code instructions, when loaded and run in a communication device as claimed in claim 14, for transmitting to a communication network, a respective communication device address, a respective communication device type, a respective communication device state and an identifier of a user to which said communication device belongs.
